Europäisches Patentamt

European Patent Office

Office européen des brevets

(11) Numéro de publication: **0 202 148**

**A1**

(12) **DEMANDE DE BREVET EUROPEEN**

(21) Numéro de dépôt: **86400877.6**

(22) Date de dépôt: **23.04.86**

(51) Int. Cl.⁴: **B65G 47/24**

(30) Priorité: **29.04.85 FR 8506876**

(43) Date de publication de la demande:
**20.11.86 Bulletin 86/47**

(84) Etats contractants désignés:
**AT BE CH DE FR GB IT LI LU NL SE**

(71) Demandeur: **"ATECMI", S.A. dite:**
**7 bis, rue Louis Blanqui**
**F-59760 Grande Synthe(FR)**

(72) Inventeur: **Bernaert, Jean**
**Les bangalis Route de Furnes Zuydcoote**
**F-59123 Bray Dunes(FR)**

(74) Mandataire: **Ecrepont, Robert**
**CABINET ECREPONT ROBERT 12, Place**
**Simon Vollant**
**F-59800 Lille(FR)**

(54) **Installation de redressement d'objets, notamment de récipients présentant un goulot et un culot tels des bouteilles.**

(57) L'invention se rapporte à une installation de redressement d'objets et notamment mais non exclusivement de récipients présentant un goulot et un culot tels des bouteilles.

Elle est caractérisée en ce que l'axe (17) de la roue est coaxial au tambour (25) de renvoi du convoyeur d'évacuation (18) dit troisième convoyeur et situé à une distance telle des axes (23, 24) des poulies de renvoi du deuxième convoyeur (8) que les berceaux redresseurs interfèrent dans leur rotation avec le parcours des objets alors qu'ils sont encore couchés sur ce deuxième convoyeur.

Application à l'industrie des machines de traitement de bouteilles.

EP 0 202 148 A1

# INSTALLATION DE REDRESSEMENT D'OJET5 NOTAMMENT DE RECIPIENTS PRESENTANT UN GOULOT ET UN CULOT TELS DES BOUTEILLES

L'invention concerne une installation de redressement d'objets notamment de récipients présentant un goulot et un culot, tels des bouteilles.

Une telle installation présente une application avantageuse, notamment mais non exclusivement en aval d'un poste de traitement de bouteilles en vrac, après un poste d'alignement dans le but de redresser les bouteilles sur leur culot et pouvoir les convoyer ensuite, les stocker ou les ranger sur des palettes, etc ...

Pour des raisons de commodité et de gain de temps, pour la reprise des bouteilles vides dans les magasins alimentaires, il est habituel de stocker ces bouteilles en vrac dans des conteneurs.

En vue du recyclage de ces bouteilles, il est avantageux d'automatiser les opérations de vidage des conteneurs, de tri et de redressement des bouteilles, de façon à éviter un travail de manutention fastidieux et parfois dangereux compte tenu des risques des bris de verre.

On sait actuellement opérer de manière automatique le vidage progressif d'un conteneur rempli de bouteilles vides en vrac sur des moyens dits d'alignement tels une table vibrante.

En sortie de ces moyens d'alignement, les bouteilles sont alignées les unes la suite des autres mais orientées indifféremment le culot ou le goulot en avant.

Elles sont alors par des moyens d'alimentation conduites à l'installation de redressement.

Comme son nom l'indique, l'installation de redressement objet de l'invention a pour fonction de redresser les bouteilles sur leur culot quelle que soit leur orientation en sortie des moyens d'alignement.

On connaît déjà de telles installations qui redressent des bouteilles (FR-A-1.452.872 et US-A-3.339.702).

Chacune de ces installations de redressement de bouteilles comprend tout d'abord un moyen d'alimentation amenant et délivrant les bouteilles sensiblement les unes à la suite des autres mais indifféremment le goulot ou le culot en avant.

Aussi, en aval du moyen d'alimentation, l'installation présente des moyens dits de retournement qui, si les bouteilles sont dans le mauvais sens, font subir à celles-ci un retournement avant de les conduire aux moyens de redressement proprement dits.

Les moyens de retournement ont donc pour fonction d'orienter toutes les bouteilles de manière à les mettre en position couchée dans le même sens, le sens préféré étant celui où le culot est en avant et donc, en particulier, les moyens retournent sur elles-même les bouteilles se présentant dans le sens inverse avec le goulot en avant.

Ces moyens comprennent sous la sortie du moyen d'alimentation un convoyeur qui, de préférence, est constitué de deux courroies sans fin, parallèles entre elles, écartées d'une distance inférieure au diamètre du corps des bouteilles dit diamètre maximum.

Par exemple, le convoyeur comprend deux courroies rondes parallèles.

Le convoyeur avance évidemment vers la sortie de l'installation. Les moyens de retournement comprennent par ailleurs une butée, située sensiblement en aval de l'aplomb de la sortie du moyen d'alimentation et ce, entre les deux courroies qui constituent le convoyeur et sensiblement sous leur niveau.

La butée est disposée de façon que le goulot d'une bouteille se présentant goulot en avant s'engage entre ces courroies et bute contre la butée lors du transfert de la bouteille du moyen d'alimentation vers le convoyeur, et reste retenu par la butée jusqu'à la culbute complète de la bouteille sous l'effet notamment de l'entraînement des courroies qui constituent le convoyeur, sur lequel convoyeur la bouteille appuie par sa zone d'épaulement séparant le corps du goulot.

Au contraire, la bouteille arrivant culot en avant est transférée vers le convoyeur sans que la butée lui fasse subir de retournement car la dite butée, qui est située sous le niveau des courroies du deuxième convoyeur, est hors d'atteinte du culot d'une bouteille se présentant culot en avant, lequel culot appuie sur le convoyeur.

Dans l'une des ces installations (FR-A-1.452.872) la butée est fixe, dans l'autre (US-A-3.339.702) elle est réalisée sous la forme d'une courroie mue en sens inverse du convoyeur mais ces moyens sont équivalents.

En aval des moyens de retournement, l'installation présente les moyens de redressement proprement dits.

Ces moyens de retournement donnent toute satisfaction mais, malheureusement, leur moyen d'alimentation se présentant sous la forme d'une goulotte déposant les bouteilles perpendiculairement au convoyeur, ils obligent à prévoir des moyens pour arrêter les bouteilles près de la sortie de la goulotte pour n'autoriser leur dépôt sur le convoyeur que lorsque la place est libérée par la bouteille précédente et interrompt donc le débit.

En outre, ils font que les bouteilles n'appuyent sur le convoyeur que par leur propre poids.

Enfin, ils obligent, lorsque la bouteille arrive culot en avant, à retenir son goulot pour qu'elle se couche sur le convoyeur en risquant dans sa chute de heurter l'arrière de la goulotte.

Dans un domaine autre que le redressement de bouteilles, on connaît (CH-A-470.304) des moyens de redressement qui consistent, en une roue dentée mue en rotation autour de son axe et dont chaque creux entre deux dents successives dites berceaux redresseurs est délimité par deux faces sensiblement perpendiculaires entre elles, dont une face de support des objets couchés issus du convoyeur et qui, à cet effet, est orientée de manière à revenir à chaque tour de roue dans le plan supérieur utile du convoyeur tandis que l'autre face dite face de butée est située de manière telle qu'après une rotation de la roue et donc de l'objet de quatre vingt dix degrés, elle parvienne au niveau du plan supérieur utile d'un moyen de réception comprenant un convoyeur d'évacuation des objets redressés.

L'axe de la roue et les axes des tambours de renvoi du convoyeur et du convoyeur d'évacuation sont parallèles entre eux.

Dans l'installation, cet axe de la roue est situé en aval du convoyeur des moyens de retournement.

Avec ces moyens de redressement, tels que conçus pour l'application qui est actuellement la leur, ils nécessitent en amont et en aval de la roue une table de liaison avec chacun des convoyeurs des moyens de retournement et d'évacuation ce qui oblige les objets à se pousser les uns les autres pour passer du convoyeur des moyens de retournement à la roue puis de la roue au convoyeur d'évacuation, ce qui freine donc le débit et ne peut convenir pour des bouteilles.

En outre, rien ne contrôle la position des objets sur les berceaux et ceux-ci risquent donc d'être insuffisamment engagés sur le berceau pour être entraînés et de retomber sur la table, ce qui n'est pas tolérable pour des bouteilles.

Un des buts de la présente invention est de proposer une installation de redressement qui est fiable et qui ne met en oeuvre que des moyens mécaniques simples.

Un autre but de la présente invention est de proposer une installation de redressement qui présente un débit élevé.

D'autres buts et avantages de la présente invention appara'tront au cours de la description qui va suivre.

A cet effet, l'invention a pour objet une installation de redressement d'objets et notamment de récipients du type précité notamment caractérisée en ce que l'axe de la roue est coaxial au tambour de renvoi du convoyeur d'évacuation dit troisième convoyeur et situé à une distance telle des axes des poulies de renvoi du deuxième convoyeur que les berceaux redresseurs interfèrent dans leur rotation avec le parcours des objets alors qu'ils sont encore couchés sur ce deuxième convoyeur.

L'invention sera bien comprise l'aide de la description ci-après faite à titre d'exemple non limitatif, en regard du dessin ci-annexé qui représente schématiquement :

-figure 1 : une vue de côté illustrant l'installation de redressement,

-figure 2 : une vue de côté de la même installation avec toutefois une disposition différente des récipients,

-figure 3 : une vue partielle de dessus de l'installation des figures 1 et 2 plus précisément au niveau des moyens de redressement,

-figure 4 : une vue partielle de côté au niveau des moyens de redressement illustrant un aspect de leur fonctionnement.

La description qui va suivre sera faite dans l'application de l'invention a des bouteilles.

Ceci n'est pas limitatif, et d'une manière générale, l'invention s'applique au redressement d'objets et notamment de récipients sensiblement cylindriques pourvus d'un goulot, d'un culot et d'un corps central avec une zone d'épaulement entre le goulot et le corps du récipient.

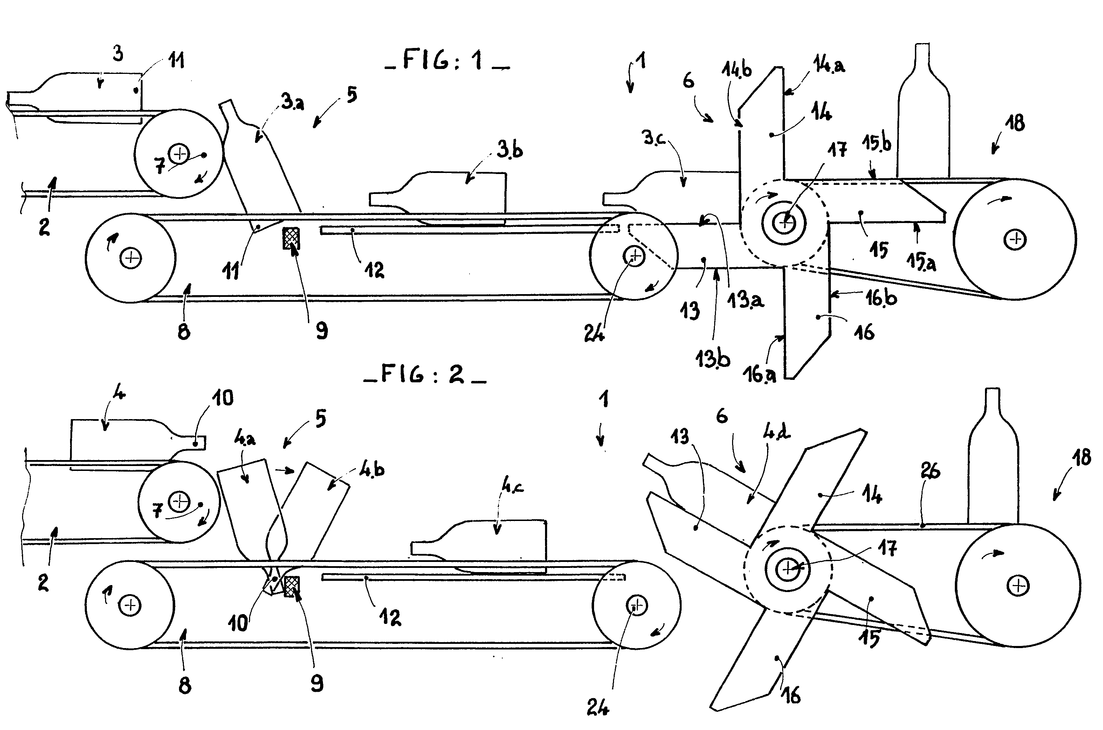

En se référant aux figures 1 et 2, l'installation 1 de redressement de bouteilles comprend tout d'abord un moyen d'alimentation 2 amenant et délivrant les bouteilles sensiblement les unes à la suite des autres mais indifféremment le goulot et le culot en avant.

Ainsi, à titre d'illustration, la bouteille 3 en figure 1 est délivrée culot 11 en avant et la bouteille 4 en figure 2 arrive goulot 10 en avant.

En amont du moyen d'alimentation 2, se trouvent tous moyens appropriés pour amener les bouteilles alignées en position requise.

Par exemple, ces moyens consistent en une table d'alignement vibrante, équipée de couloirs ou canaux dans lesquels les bouteilles s'alignent par elles-même.

L'installation 1 des figures 1, 2 présente en aval du moyen d'alimentation 2 des moyens 5 de retournement des bouteilles, suivis par des moyens 6 de redressement.

Les moyens 5 de retournement ont pour fonction d'orienter toutes les bouteilles de manière à les mettre en position couchée dans le même sens, le sens préféré étant celui où le culot est en avant et donc, en particulier, les moyens 5 retournent sur elles-même les bouteilles se présentant dans le sens inverse avec le goulot en avant.

Ces moyens 5 comprennent sous la sortie 7 du moyen d'alimentation un convoyeur 8 qui, de préférence, est constitué de deux courroies sans fin, parallèles entre elles, écartées d'une distance inférieure au diamètre du corps des bouteilles dit diamètre maximum.

Par exemple, le convoyeur 8 comprend deux courroies rondes parallèles, respectivement soutenues par un support de guidage (non représenté) au moins dans la zone utile du convoyeur 8 où il porte des bouteilles.

Le convoyeur 8 avance évidemment vers la sortie de l'installation.

Les moyens de retournement 5 comprennent par ailleurs une butée 9, située sensiblement en aval de l'aplomb de la sortie 7 du moyen d'alimentation 2 et ce, entre les deux courroies qui constituent le convoyeur 8 et sensiblement sous leur niveau.

En se référant plus précisément à la figure 2, la butée 9 est disposée de façon que le goulot 10 d'une bouteille 4 se présentant goulot en avant s'engage entre ces courroies et bute contre la butée 9 lors du transfert de la bouteille 4 du moyen d'alimentation 2 vers le convoyeur 8, et reste retenu par la butée 9 jusqu'à la culbute complète de la bouteille 4 sous l'effet notamment de l'entraînement des courroies qui constituent le convoyeur 8, sur lequel convoyeur 8 la bouteille appuie par sa zone d'épaulement séparant le corps du goulot.

La figure 2 représente la bouteille 4 arrivant goulot en avant dans ses différentes phases de retournement 4a, 4b, 4c sous l'effet de l'engagement de son goulot 10 contre la butée 9. En aval des moyens de retournement 5, dans sa position 4c, la bouteille 4 se trouve avec le culot en avant.

En se référant à la figure 1, en contrepartie, la bouteille 3 arrivant culot en avant est transférée vers le convoyeur sans que la butée 9 lui fasse subir de retournement car la dite butée 9, qui est située sous le niveau des courroies du deuxième convoyeur 8, est hors d'atteinte du culot d'une bouteille se présentant culot en avant, lequel culot appuie sur le convoyeur.

figure 1 représente la bouteille 3 dans ses différentes phases 3a, 3b de sortie du moyen d'alimentation, de passage dans les moyens de retournement 5, et au delà de ces moyens, en position 3b où elle se présente culot en avant.

Les courroies du convoyeur 8 sont écartées d'une distance d'environ cinquante deux millimètres et la butée 9 est située en avant de la sortie 7 du moyen d'alimentation 2 à une distance d'environ cent soixante dix millimètres, et à quarante millimètres sous le niveau des courroies du deuxième convoyeur. Naturellement, ces chiffres ne sont donnés qu'à titre indicatif, et n'ont aucune valeur limitative pour l'invention.

En aval des moyens de retournement 5, l'installation 1 présente les moyens 6 de redressement.

Dans l'exemple illustré, les moyens de redressement 6 consistent, de manière connue en d'autre domaine que le redressement de bouteilles, en une roue dentée 6 mue en rotation autour de son axe 17 et dont chaque creux entre deux dents successives dites berceaux redresseurs 13 à 16 est délimité par deux faces sensiblement perpendiculaires entre elles, dont une face de support 13a à 16a des bouteilles couchées issues du convoyeur 8 et qui, à cet effet, est orientée de manière à revenir à chaque tour de roue 6 dans le plan supérieur utile du convoyeur 8 tandis que l'autre face 13b à 16b du creux dite face de butée est située de manière telle qu'après une rotation de la roue 6 et donc de l'objet de quatre vingt dix degrés, elle parvienne au niveau du plan supérieur utile d'un moyen de réception 18 comprenant un convoyeur d'évacuation des bouteilles à redresser.

L'axe 17 de la roue 6 et les axes 23, 24 des poulies de renvoi 21, 22 du convoyeur 8 et du tambour de renvoi 25 du convoyeur d'évacuation 18 sont parallèles entre eux.

Dans l'installation, cet axe de la roue est situé en aval du convoyeur 8 des moyens de retournement 5.

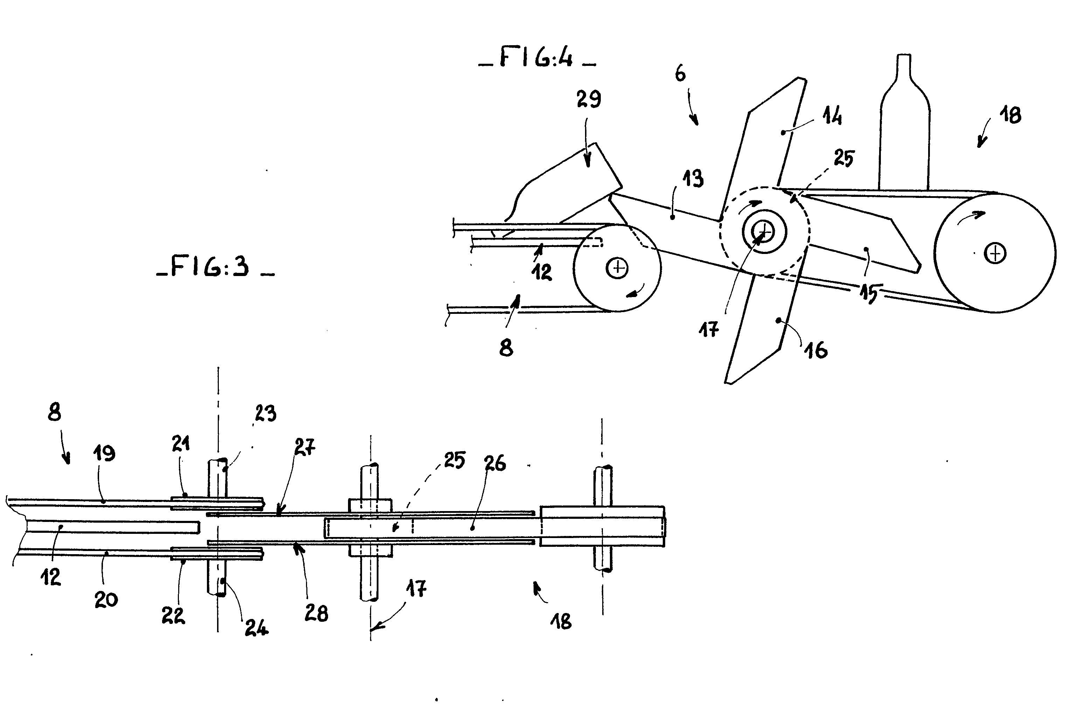

La figure 3 représente en vue de dessus, la disposition relative du convoyeur 8, des moyens de retournement 5, du convoyeur d'évacuation 18 et des berceaux redresseurs 13 à 16 avec leur axe 7.

Dans cette figure, cependant, les proportions entre les différents éléments n'ont pas été respectées volontairement de façon à pouvoir les distinguer plus facilement.

Selon une caractéristique essentielle de l'invention, au lieu d'une goulotte déposant les bouteilles perpendiculairement au convoyeur 8, le moyen d'alimentation 2 du convoyeur 8 consiste en un premier convoyeur 2 à bande sans fin desservant directement le convoyeur 8 des moyens de retournement 5 du deuxième convoyeur 8 et se déplace sensiblement horizontalement dans le même sens que ce deuxième convoyeur 8 dont l'entrée est située sous la sortie 7 du premier convoyeur 2 à une distance sensiblement inférieure à la longueur des bouteilles, de façon que chacune de celles-ci puisse être transférée du premier 2 vers le second convoyeur 8 de manière sensiblement continue et que l'arrière de chaque bouteille soit guidé dans sa descente vers le deuxième convoyeur 8 par la poulie de renvoi du premier convoyeur.

En outre, par adhérence sur les bouteilles, le convoyeur d'alimentation 2 appuie les bouteilles sur le convoyeur 8 du moyen de retournement 5 et accélère leur entraînement par ce dernier.

De façon à faciliter le transfert des bouteilles du premier convoyeur 2 vers le deuxième convoyeur 8, et le cas échéant, le retournement des bouteilles 4 se présentant goulot 10 en avant, la vitesse de défilement du deuxième convoyeur 8 est supérieure à la vitesse de défilement du premier convoyeur 2.

A titre d'illustration, on a obtenu de bons résultats pour des bouteilles standards de soixante quinze centilitres à un litre, d'approximativement quatre vingts millimètres de diamètre en adoptant une différence de niveau d'approximativement deux cents millimètres entre le premier et le second convoyeur, une vitesse de défilement du premier convoyeur de deux cent vingt cinq millimètres par seconde et une vitesse de défilement du deuxième convoyeur de six cent douze millimètres par seconde environ.

Selon une autre caractéristique de l'invention, l'axe 17 de la roue 6 est coaxial au tambour 25 de renvoi du convoyeur d'évacuation 18 dit troisième convoyeur et situé à une distance telle, de l'axe 23, 24 des poulies de renvoi 21, 22 du deuxième convoyeur 8, que les berceaux redresseurs 13 à 16 interfèrent dans leur rotation avec le parcours des bouteilles alors qu'elles sont encore couchées sur ce deuxième convoyeur 8.

Grâce à ces dispositions, le transfert du deuxième convoyeur 8 à la roue 6 puis de celle-ci au troisième convoyeur 18 s'opère sans tassement des bouteilles.

Dans l'exemple représenté, la roue 6 comprend quatre berceaux redresseurs 13 à 16 qui sont disposés en étoile à angle droit les uns des autres. Ceci permet au berceau d'avoir des faces opposées parallèles entre elles.

Avantageusement, la surface supérieure utile du troisième convoyeur 18 est située un niveau supérieur à celui de la surface utile du deuxième convoyeur 8 et cette différence de hauteur correspond sensiblement au rayon du tambour de renvoi 25 du troisième convoyeur 18.

De même, pour chaque berceau, la distance entre une face de support 13a à 16a et une face de butée 13b à 16b correspond approximativement au rayon de ce tambour de renvoi 25 du troisième convoyeur 18.

Par ailleurs, au moins près de la sortie du deuxième convoyeur 8, sensiblement sous le niveau des courroies 19, 20 de ce deuxième convoyeur, est prévue une table de soutien 12 au moins sensiblement horizontale et située de manière que si une bouteille est insuffisamment engagée sur un berceau redresseur, lorsque celui-ci occupera la position qui est celle du berceau référencé 13 dans la figure 1, la bouteille se trouvera soulevée par son culot par l'extrémité du berceau redresseur mais viendra alors en appui par son goulot sur la dite table de soutien 12. La figure 4 représente à titre d'illustration une bouteille 29 dans cette position.

Tant que le berceau redresseur 13 la soulève au niveau de son culot, elle n'est plus en contact avec les courroies du deuxième convoyeur 8 et, de ce fait, elle n'avance plus.

Après un certain angle de rotation, l'extrémité du berceau 13 relâche le culot de la bouteille 29 retombe mais sur les courroies du convoyeur 8 et non sur une table et reprend sa progression vers l'extrémité du convoyeur afin de pouvoir être redressée par le berceau redresseur suivant.

Comme indiqué plus haut, les berceaux interfèrent avec le parcours des bouteilles qui sont encore sur les courroies du deuxième convoyeur 8.

C'est pourquoi, le convoyeur 8 présente deux courroies 19 et 20 qui sont rappelées au niveau de leur extrémité aval par deux poulies 21 et 22.

La disposition adoptée fait apparaître que les axes 23 et 24 des poulies 21 et 22 s'étendent respectivement transversalement vers l'extérieur du convoyeur 8 afin que l'espace situé entre les poulies 21 et 22 reste libre.

Dans cet espace s'engagent successivement les berceaux redresseurs 13 à 16, et constammant le tambour de renvoi 25 de la bande ou de la chaine 26 du troisième convoyeur.

Dans l'exemple illustré, chaque berceau redresseur 13 à 16 est constitué de deux flasques parallèles 27 et 28, qui sont respectivement solidarisées à l'axe 17.

L'ensemble est dimensionné de façon que, transversalement, la distance entre les deux flasques 27 et 28 des berceaux redresseurs 13 à 16 soit inférieure à la largeur de l'espace compris entre les deux poulies 21 et 22 afin que les différents berceaux redresseurs 13 à 16 puissent évoluer entre les poulies 21 et 22 et les courroies 19, 20.

Notamment, la distance entre les deux flasques 27, 28 peut être de trente cinq millimètres pour un écartement de cinquante cinq millimètres environ entre les deux courroies 19 et 20.

Naturellement, une disposition inverse pourrait convenir c'est à dire selon laquelle les flasques 27 et 28 des berceaux redresseurs sont situées respectivement vers l'extérieur des courroies 19 et 20 et des poulies 21 et 22 dont l'axe de support serait situé dans la zone centrale.

Comme indiqué plus haut, la roue 6 et les berceaux redresseurs 13 à 16 sont animés d'un mouvement de rotation tendant à faciliter le passage des bouteilles du deuxième convoyeur 8 vers le troisième convoyeur 18.

Le mouvement de rotation peur être séquentiel mais de préférence, il se déroule de façon continue dans un plan vertical parallèle à la direction d'avancement des bouteilles sur le deuxième convoyeur 8.

Il est illustré dans les figures 1 et 2 dans ses différentes phases.

En se référant à la figure 1, la bouteille 3 en position 3c a atteint l'extrémité aval du deuxième convoyeur 8 sensiblement à l'instant oú la face de support 13a du berceau redresseur 13 arrive en position horizontale dans sa phase de remontée c'est à dire qu'elle est engagée entre les deux courroies du deuxième convoyeur 8.

Dans cette position, le culot de la bouteille 3c vient en butée contre la face de butée 14b du berceau précédent 14.

En continuant ce mouvement de rotation, le berceau 13 emmène avec lui la bouteille, ce qui est illustré en figure 2 avec la bouteille 4d.

Arrivée en position verticale, la bouteille se trouve en appui sur son culot, sur la surface supérieure du troisième convoyeur 18 qui assure son évacuation vers un poste de traitement ultérieur.

La vitesse de défilement du troisième convoyeur 18 est déterminée en fonction de la vitesse de rotation des berceaux redresseurs 13 à 16 de façon que les bouteilles redressées soient évacuées à une vitesse au moins égale à la vitesse linéaire de déplacement des extrémités des berceaux redresseurs afin qu'elles échappent à ceux-ci au niveau du troisième convoyeur.

Avantageusement, les différents berceaux redresseurs 13 à 16 constituent, à l'extrémité du deuxième convoyeur 8, des rampes guidant les bouteilles depuis leur extrémité libre jusqu'à ce que leur culot vienne en appui sur eux en attendant le mouvement de redressement imprimé par le berceau redresseur suivant.

## Revendications

1. Installation de redressement d'objets et notamment mais non exclusivement de récipients présentant un goulot et un culot tels des bouteilles, dont les moyens de redressement (6) :

-d'une part, sont desservis en objets à redresser par un convoyeur (8) dit de retournement ou deuxième convoyeur, constitué de deux courroies (19, 20) parallèles entre elles, passant en sortie sur des poulies de renvoi (21, 22) tournant autour de leur axe (23, 24) et, d'autre part, transfèrent les objets redressés sur un autre convoyeur (18) dit d'évacuation ou troisième convoyeur également constitué d'au moins une courroie ou chaîne (26) passant à son entrée sur un tambour de renvoi (25) tournant autour de son axe (17),

-consistent en une roue dentée (6) mue en rotation autour de son axe (17) et dont chaque creux entre deux dents successives dites berceaux redresseurs (13 à 16) est délimité par deux faces sensiblement perpendiculaires entre elles dont une face de support (13a 16a) des objets couchés issus du deuxième convoyeur (8) et qui, à cet effet, est orientée de manière à revenir à chaque tour de roue (6) dans le plan supérieur utile de ce deuxième convoyeur (8) tandis que l'autre face (13b à 16b) du creux dite face de butée est située de manière telle qu'après une rotation de la roue (6) et donc de l'objet de quatre vingt dix degrés, elle parvienne au niveau du plan supérieur utile d'un moyen de réception (18) comprenant le troisième convoyeur d'évacuation des objets redressés, l'axe (17) de la roue (6) et les axes (23, 24) des poulies (21, 22) de renvoi du convoyeur (8) et l'axe (17) du tambour de renvoi (25) du convoyeur d'évacuation (18) étant parallèles entre eux et cet axe (17) de la roue (6) étant situé en aval du deuxième convoyeur (8) des moyens de retournement (5),

cette installation étant **CARACTERISEE** en ce que l'axe (17) de la roue (6) est coaxial au tambour - (25) de renvoi du convoyeur d'évacuation (18) dit troisième convoyeur et situé à une distance telle des axes (23, 24) des poulies (21, 22) de renvoi du deuxième convoyeur (8) que les berceaux redresseurs (13 à 16) interfèrent dans leur rotation avec le parcours des objets (3) alors qu'ils sont encore couchés sur ce deuxième convoyeur (8).

2. Installation selon la revendication 1 **caractérisée** en ce que la roue (6) comprend quatre berceaux redresseurs (13 à 16) qui sont disposés en étoile à angle droit les uns des autres.

3. Installation selon la revendication 1 ou 2 **caractérisée** en ce que la surface supérieure utile du troisième convoyeur (18) est située à un niveau supérieur à celui de la surface utile du deuxième convoyeur (8) et cette différence de hauteur correspond sensiblement au rayon du tambour de renvoi (25) du troisième convoyeur (18).

4. Installation selon l'une quelconque des revendications 1 à 3 **caractérisée** en ce que, pour chaque berceau, les faces de support et de butée sont parallèles entre elles et la distance entre une face de support (13a à 16a) et une face de butée - (13b à 16b) correspond approximativement au rayon de ce tambour de renvoi (25) du troisième convoyeur (18).

5. Installation selon l'une quelconque des revendications 1 à 4 **caractérisée** en ce que, près de la sortie du deuxième convoyeur (8), sensiblement sous le niveau des courroies de ce deuxième convoyeur, est prévue une table de soutien (12) au moins sensiblement horizontale de manière que, si un objet est insuffisamment engagé sur un berceau redresseur, l'objet se trouve soulevé par son culot par l'extrémité du berceau redresseur mais vient alors en appui par son goulot sur la table de soutien (12) jusqu'à une position où il n'est plus en contact avec les courroies du deuxième convoyeur (8) et de ce fait, il n'avance plus.

6. Installation selon l'une quelconque des revendications 1 à 5 **caractérisée** en ce que les axes (23 et 24) des poulies (21, 22) s'étendent respectivement transversalement vers l'extérieur du convoyeur (8) afin que l'espace situé entre les poulies (21, 22) soit libre pour que s'y engagent successivement les berceaux redresseurs (13 à 16) et le tambour de renvoi (25) de la bande ou de la chaîne (26) du troisième convoyeur (18).

7. Installation selon l'une quelconque des revendications 1 à 6 **caractérisée** en ce que chaque berceau redresseur (13 à 16) est constitué de deux flasques parallèles (27, 28) qui sont respectivement solidarisées à l'axe (17), la distance entre les deux flasques (27, 28) étant inférieure à la largeur de l'espace compris entre les deux poulies (21, 22).

8. Installation selon la revendication 7 **caractérisée** en ce que, pour un écartement de cinquante cinq millimètres environ entre les deux courroies (19 et 20), la distance entre les deux flasques (27 et 28) est de trente cinq millimètres.

9. Installation selon l'une quelconque des revendications 1 à 8, appliquée au redressement de récipients présentant un goulot et un culot tels des bouteilles, laquelle installation comprend, en amont des moyens de redressement (6) des moyens de retournement (5) eux-même placés en sortie (7) de moyens d'alimentation (2) fournissant les récipients alignés les uns à la suite des autres mais, indifféremment, le goulot ou le culot en avant, ces moyens de retournement (5) comprenant :

-un convoyeur (8) qui est formé de deux courroies sans fin (19, 20) parallèles entre elles et écartées d'une distance inférieure au diamètre maximum des récipients et,

-une butée (9) située :

. sensiblement en aval de la sortie (7) du moyen d'alimentation (2), et,

. entre les deux courroies (19, 20) du deuxième convoyeur (8) sensiblement sous leur niveau dans une position telle qu'en particulier le goulot (10) d'un récipient (4) véhiculé par le moyen d'alimentation (2) goulot en avant et transféré par le moyen d'alimentation (2) vers le deuxième convoyeur (8) s'engage entre les courroies du deuxième convoyeur contre la butée (9) et y reste retenu par celle-ci jusqu'à la culbute complète (4a, 4b, 4c) du récipient sous l'effet de l'entraînement des courroies du convoyeur (8),

cette installation étant **caractérisée** en ce qu'au lieu d'une goulotte déposant les récipients perpendiculairement au deuxième convoyeur (8), le moyen d'alimentation (2) du deuxième convoyeur - (8) consiste en un premier convoyeur (2) à bande sans fin desservant directement le deuxième convoyeur (8) et se déplaçant sensiblement horizontalement dans le même sens que celui-ci, le deuxième convoyeur (8) ayant son entrée située sous la sortie (7) du premier convoyeur (2) à une distance sensiblement inférieure à la longueur des récipients.

10. Installation selon la revendication 9 **caractérisée** en ce que, pour des bouteilles standards de soixante quinze centilitres à un litre, d'approximativement quatre vingts millimètres de diamètre, la différence de niveau est, entre le premier et le second convoyeur, d'approximativement deux cents millimètres et en ce que les vitesses de défilement sont de l'ordre, pour le premier convoyeur, de deux cent vingt cinq millimètres par seconde, et, pour le deuxième convoyeur, de six cent douze millimètres par seconde.

_FIG: 1_

_FIG: 2_

0 202 148

_FIG:4_

_FIG:3_

0 202 148

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-1 363 024 (SIEMAG) <br> * Résumé, points 1,2,3; figures; page 2, colonne 2, lignes 19-46 * | 1,9 | B 65 G 47/24 |
| A | | 2-4 | |
| | --- | | |
| D,Y | FR-A-1 452 872 (ETIMO) <br> * Page 4. colonne 1, ligne 53 - colonne 2, ligne 39; figures * | 1,9 | |
| | --- | | |
| A | EP-A-0 101 025 (SCHULER GmbH) <br> * Revendication 1; figures * | 6,7 | |
| | --- | | |
| D,A | US-A-3 339 702 (R. NOVAK) <br> * Revendications 1,2,7,9; figures * | 1,9 | |
| | | | **DOMAINES TECHNIQUES RECHERCHES (Int. Cl.4)** |
| | --- | | |
| A | US-A-3 425 530 (R.C.E. CARTER) <br> * Revendications 1,3-5; figures * | 1,9 | B 65 G |
| | --- | | |
| D,A | CH-A- 470 304 (C. DROHMANN) <br> * Revendications et sous revendications 1,2; figures * | 1,3,9 | |
| | ----- | | |

Le présent rapport de recherche a été établi pour toutes les revendications

| Lieu de la recherche | Date d'achèvement de la recherche | Examinateur |
|---|---|---|
| LA HAYE | 12-08-1986 | VAN ROLLEGHEM F.M. |